# EUROPÄISCHE PATENTSCHRIFT

(11) **EP 0 894 697 B1**
(45) Veröffentlichungstag und Bekanntmachung des Hinweises auf die Patenterteilung: **03.09.2003**
(21) Anmeldenummer: 98113924.9
(22) Anmeldetag: 24.07.1998
(51) Int. Cl.: B62D 21/02

(54) **Profilträger für den Tragrahmen eines Nutzfahrzeugs und Verfahren zu seiner Herstellung**
Profiled beam for the frame of a commercial vehicle and method for its manufacture
Profilé pour le châssis d'un véhicule utilitaire et procédé pour sa fabrication

(30) Priorität: 02.08.1997 DE 19733470
(43) Veröffentlichungstag der Anmeldung: 03.02.1999
(73) Patentinhaber: DaimlerChrysler AG, 70567 Stuttgart (DE)
(72) Erfinder: Martin, Gerd, 70327 Stuttgart (DE); Priwitzer, Michael, 73734 Esslingen (DE)

(56) Entgegenhaltungen:
- US-A- 2 820 645
- US-A- 3 939 553
- US-A- 4 147 379
- US-A- 4 206 536
- US-A- 4 969 250
- US-A- 5 417 022

## Beschreibung

Die Erfindung betrifft einen vorzugsweise U-förmig profilierten Profilträger, insbesondere einen Rahmenlängsträger, für einen Tragrahmen eines Nutzfahrzeugs mit einem längserstreckten Mittelsteg, der auf wenigstens einer Seite von wenigstens einem abgewinkelten Profilschenkel flankiert ist, wobei das Profilträger mit wenigstens einer Abkröpfung versehen ist, sowie ein Verfahren zu seiner Herstellung.

Ein solcher Profilträger ist in Form eines Rahmenlängsträgers für einen Tragrahmen eines Lastkraftwagens allgemein bekannt. Der Rahmenlängsträger weist einen im montierten Zustand vertikalen Mittelsteg sowie einen als Profilschenkel gestalteten kopfseitigen Flansch und einen ebenfalls als Profilschenkel gestalteten, fußseitigen Flansch auf. Der Rahmenlängsträger wird aus einem einstückigen Stahlblech durch unterschiedliche Preß- und Biegeschritte profiliert. Insbesondere im Achsbereich des Tragrahmens kann es zur Schaffung ausreichender Achs- und Radfreiwege notwendig sein, den Rahmenlängsträger mit entsprechenden Abkröpfungen in Fahrzeughoch- oder Fahrzeugquerrichtung zu versehen. Durch die Umformung des Stahlbleches zu einem abgekröpften Profilträger entstehen hohe Materialverformungen und Eigenspannungen im Bereich der Abkröpfungen. Diese Materialverformungen und Eigenspannungen können bei länger andauernden Wechselbeanspruchungen der Profilträger Ausgangsstellen von Anrissen sein, die die Lebensdauer der Träger beeinträchtigen.

Aufgabe der Erfindung ist es, einen Profilträger sowie ein Verfahren der eingangs genannten Art zu schaffen, die Eigenspannungen und Materialverformungen im Bereich von Abkröpfungen zuverlässig vermeiden und günstige Voraussetzungen für eine höhere Lebensdauer der Profilträger bieten.

Diese Aufgabe wird für den Profilträger durch die Merkmale des Anspruchs 1 gelöst. Durch die Trennung des Profilträgers in Mittelsteg und Profilschenkel können Abkröpfungen erzielt werden, ohne daß diese zu Eigenspannungen und Materialverformungen des Profilträgers führen. Erfindungsgemäß werden die getrennten Bauteile jeweils lediglich durch einfache, geradlinige Biegekanten umgeformt, die in unterschiedlichen und aufeinander abgestimmten Horizontaloder Vertikalebenen liegen, und anschließend zusammengefügt. Die Trennung von Mittelsteg und Profilschenkel ermöglicht zudem den Einsatz unterschiedlicher Materialien oder/und Materialstärken für die jeweiligen Bauteile, wobei insbesondere für den Mittelsteg auch Leichtbaumaterialien eingesetzt werden können. Die erfindungsgemäße Lösung ist vorzugsweise für Rahmenlängsträger geeignet. Der Profilträger kann jedoch auch in Form einer Winkeleinlage in einem Kröpfungsbereich des jeweiligen Rahmenlängsträgers ausgeführt sein. Durch die erfindungsgemäße Lösung ergibt sich eine erhöhte Lebensdauer für den Profilträger. Außerdem wird eine wesentlich vereinfachte Herstellung durch den Einsatz lediglich einfacher Werkzeuge erzielt. Insbesondere wird lediglich eine Materialtrennvorrichtung und eine Abkantvorrichtung benötigt. Dadurch ergibt sich eine erhöhte Flexibilität bei verschiedenen Variationen von Profilträgern, insbesondere Rahmenlängsträgern.

In Ausgestaltung der Erfindung ist der Mittelsteg wenigstens auf einer Längsseite mit wenigstens einem Einzug versehen, wobei der Flanschsteg des zugeordneten Profilschenkels im Bereich des Einzugs korrespondierend gebogen ist, und wobei eine zugehörige Verbindungslasche auf die Länge des Einzuges abgestimmt ist. Dadurch wird die Formgestaltung des Profilträgers weiter verbessert, ohne daß hierzu ein erhöhter Aufwand betrieben werden muß.

In weiterer Ausgestaltung der Erfindung sind der Mittelsteg und der wenigstens eine Profilschenkel aus unterschiedlichen Materialien hergestellt. Dabei ist insbesondere für den Mittelsteg, der im Betrieb vor allem Schubbeanspruchungen ausgesetzt ist, ein Leichtbaumaterial, insbesondere Aluminium oder Magnesium einsetzbar. Der wenigstens eine Profilschenkel ist vorzugsweise aus einer Stahlblechplatine hergestellt.

In weiterer Ausgestaltung der Erfindung ist der wenigstens eine Profilschenkel mit dem Mittelsteg durch eine Vielzahl von über die Länge des Profilträgers verteilt angeordneten Befestigungselementen, insbesondere Nieten oder Schraubverbindungen, starr verbunden. Dies ist eine besonders zuverlässige Verbindungsart, die im Gegensatz zu Schweiß- oder Lötverbindungen Eigenspannungen vermeidet. Beim Vorsehen von Schraubverbindungen ergibt sich eine lösbare Zuordnung von Profilschenkeln und Mittelstegen.

Für das Verfahren wird die Aufgabe durch die Merkmale des Anspruchs 7, gelöst. Das erfindungsgemäße Verfahren ermöglicht eine äußerst kostengünstige Herstellung des Profilträgers, da lediglich einfache Blechplatinen für den Mittelsteg und die Profilschenkel vorgesehen sein müssen, die mittels einfacher und kostengünstiger Herstellungsschritte wie Trenn- und Biegeschritten entsprechend zugeschnitten und umgeformt werden. Dabei werden erfindungsgemäß lediglich einfache und geradlinige Biegekanten gebildet, durch die Eigenspannungen in den jeweiligen Bauteilen vermieden werden.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform eines erfindungsgemäßen Profilträgers in Form eines Rahmenlängsträgerabschnittes, der mit einer Abkröpfung und einem Einzug versehen ist,
- Fig. 2: den Zuschnitt eines den Obergurt des Rahmenlängsträgerabschnittes nach Fig. 1 bildenden Profilschenkels,
- Fig. 3: einen weiteren Zuschnitt ähnlich Fig. 2, der den den Untergurt bildenden Profilschenkel des Profilträgers nach Fig. 1 darstellt und
- Fig. 4: eine Seitenansicht des Profilträgers nach Fig. 1.

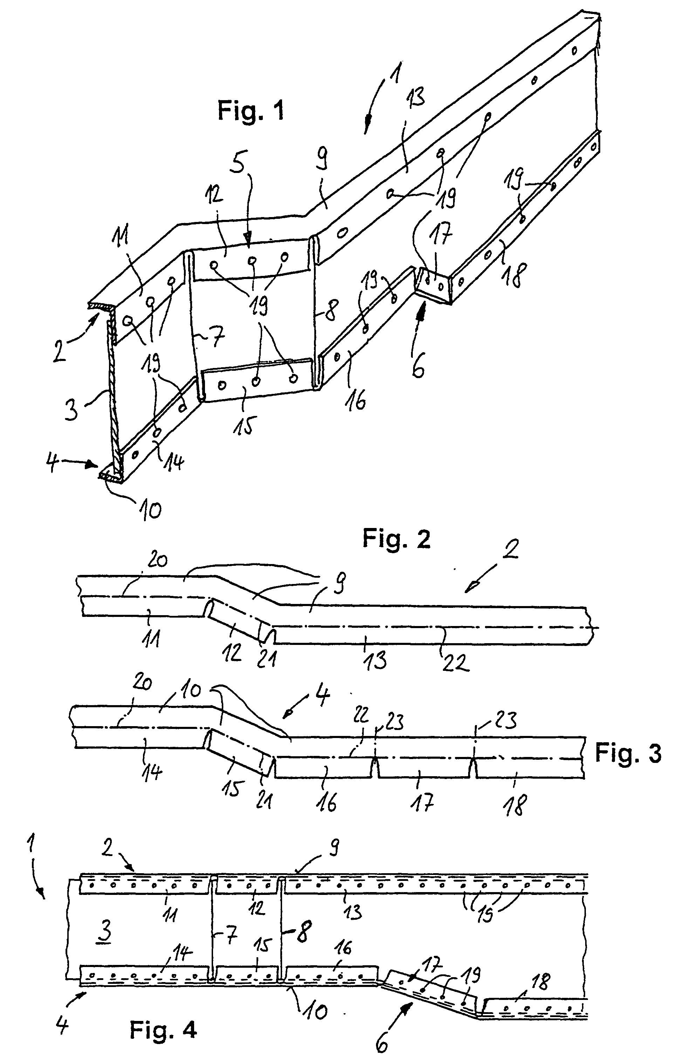

Ein Rahmenlängsträgerabschnitt nach den Fig. 1 bis 4 ist für den Einsatz in einem Tragrahmen eines Nutzfahrzeuges, insbesondere eines Lastkraftwagens, bestimmt. Der Rahmenlängsträgerabschnitt 1 ist auf einer Längsseite des Tragrahmens vorgesehen. Der gegenüberliegende Rahmenlängsträger des Tragrahmens ist spiegelsymmetrisch zu einer vertikalen Fahrzeugmittelebene, im übrigen jedoch identisch zu dem Rahmenlängsträgerabschnitt 1 aufgebaut. Der Rahmenlängsträger 1 setzt sich zusammen aus einem im montierten Zustand vertikal ausgerichteten Mittelsteg 3 und zwei auf die gegenüberliegenden Längsseiten des Mittelsteges 3 aufgesetzten Profilschenkeln 2, 4, wobei der Profilschenkel 2 einen Obergurt und der Profilschenkel 4 einen Untergurt des Rahmenlängsträgerabschnittes 1 bilden. Sowohl der Mittelsteg 3 als auch die Profilschenkel 2 und 4 sind aus Metallblechplatinen hergestellt. Der Mittelsteg 3 ist beim dargestellten Ausführungsbeispiel aus einem Leichtmetall hergestellt, die beiden Profilschenkel 2 und 4 hingegen aus Stahlblech. Der Rahmenlängsträgerabschnitt 1 erstreckt sich im montierten Zustand in Fahrzeuglängsrichtung und weist in der Darstellung nach den Fig. 1 bis 4 eine Abkröpfung 5 auf, die in Fahrzeugquerrichtung verläuft. In nicht dargestellter Weise kann der Rahmenlängsträger mit weiteren Abkröpfungen, insbesondere in Achsbereichen des Tragrahmens versehen sein, die in Fahrzeugquerrichtung oder in Fahrzeughochrichtung verlaufen.

Im Bereich der Abkröpfung 5 ist der Mittelsteg 3 um zwei zueinander parallele, in Fahrzeughochrichtung verlaufende Biegekanten 7 und 8 gebogen, wobei die Abkantungen im Bereich der Biegekanten 7 und 8 derart gewählt sind, daß sich aneinandergrenzende Stegabschnitte des Mittelsteges 3 in gleichen Winkeln mit unterschiedlichen Vorzeichen aneinanderfügen. Beim dargestellten Ausführungsbeispiel ist der Mittelsteg 3 aus einer einstückigen Blechplatine hergestellt und im Bereich der Biegekanten 7 und 8 entsprechend abgewinkelt. Bei einem nicht dargestellten Ausführungsbeispiel der Erfindung ist der Mittelsteg aus mehreren in Fahrzeuglängsrichtung aneinanderschließenden Teilstücken zusammengesetzt.

Sowohl der den Obergurt bildende Profilschenkel 2 als auch der den Untergurt bildende Profilschenkel 4 sind gemäß den Fig. 2 und 3 als ebene Zuschnitte in Form jeweils einer einstückigen Blechplatine gestaltet, wobei sowohl der Profilschenkel 2 als auch der Profilschenkel 4 auf Höhe der Abkröpfung 5 durch entsprechendes Zuschneiden winklig nachgeführt sind. Beide Profilschenkel 2, 4 weisen somit zwei in Fahrzeuglängsrichtung verlaufende, axial zueinander versetzte, Schenkelabschnitte und einen die Schenkelabschnitte miteinander verbindenden, schräg verlaufenden weiteren Schenkelabschnitt auf, die jeweils einstückig ineinander übergehen und in einer gemeinsamen Ebene angeordnet sind.

Beide Profilschenkel 2, 4 weisen in ihrer Längsrichtung auf einer Längsseite einen durchgehenden und im Bereich der Abkröpfung entsprechend abgewinkelt nachgeführten Flanschsteg 9, 10 auf, der im fertig montierten Zustand des Rahmenlängsträgerabschnittes 1 jeweils rechtwinklig vom Mittelsteg 3 abragt. Die Profilschenkel 2 und 4 des Obergurtes und des Untergurtes des Rahmenlängsträgerabschnittes 1 sind im wesentlichen identisch gestaltet, wobei die beiden Flanschstege 9 und 10 vollkommen übereinstimmen. Im Bereich der gegenüberliegenden Längsseite jedes Profilschenkels 2, 4 sind mehrere, in Längsrichtung des Profilschenkels 2, 4 aneinander anschließende Verbindungslaschen 11 bis 18 gebildet, die jeweils durch nicht näher bezeichnete Einschnitte in Querrichtung jedes Profilschenkels 2, 4 bis zu einer Mittellängsachse des jeweiligen Profilschenkels 2, 4 voneinander getrennt sind. Diese Verbindungslaschen 11 bis 18 werden bei beiden Profilschenkeln 2 und 4 zu jeweils einer Seite hin rechtwinklig zu den jeweiligen Flanschstegen 9, 10 abgekantet, wobei entsprechende Biegekanten 20 bis 22 beim dargestellten Ausführungsbeispiel im Bereich der Mittelachse jedes Profilschenkels 2, 4 liegen. Die jeweils geradlinig geführten Biegekanten 20, 21, 22 ermöglichen somit ein rechtwinkliges Abstellen der Verbindungslaschen 11, 12, 13, durch das die Verbindungslaschen 11 bis 18 die jeweiligen Längsseiten des Mittelsteges 3 parallel übergreifen.

Im Bereich des durch den Profilschenkel 4 gebildeten Untergurtes des Rahmenlängsträgerabschnittes 1 weist dieser einen zusätzlichen Einzug 6 auf. Zur Schaffung dieses Einzuges 6 ist in einfacher Weise die Platine des Mittelsteges 3 in diesem Bereich entsprechend schräg zugeschnitten. Für den den Einzug 6 flankierenden Profilschenkel 4 ist im Bereich des Einzuges durch zwei im Bereich der Ecken des Einzuges 6 vorgesehene zusätzliche Einschnitte eine Verbindungslasche 17 geschaffen, die von den nach vorne und nach hinten anschließenden Verbindungslaschen 16, 18 durch die keilförmigen Einschnitte getrennt ist. Im Bereich der keilförmigen Einschnitte ist darüber hinaus der Flanschsteg 10 durch zwei Biegungen im Bereich der in Fahrzeugquerrichtung verlaufenden Biegekanten 23 auf Höhe der Einschnitte dem Einzug 6 nachgeführt. Somit kann auch der Einzug 6 mittels der einfachen Trenn- und Biegeschritte dargestellt werden.

Beim dargestellten Ausführungsbeispiel sind der den Obergurt bildende Profilschenkel 2 und der den Untergurt bildende Profilschenkel 4 durch eine Vielzahl von in Längsrichtung des Rahmenlängsträgerabschnittes 1 verlaufenden Nietverbindungen 19 im Bereich der Verbindungslasche 11 bis 18 starr mit den zugeordneten Längsseiten des Mittelsteges 3 verbunden. Bei anderen Ausführungsbeispielen der Erfindung können auch Schraub- oder Punktschweißverbindungen vorgesehen sein.

## Patentansprüche

1. Profilträger (1), insbesondere Rahmenlängsträger, für einen Tragrahmen eines Nutzfahrzeugs mit einem längserstreckten Mittelsteg (3), der auf wenigstens einer Seite von einem abgewinkelten Profilschenkel (2, 4) flankiert ist, wobei der Profilträger (1) mit wenigstens einer Abkröpfung (5) versehen ist,
**dadurch gekennzeichnet**, d a ß
der Mittelsteg (3) und der wenigstens eine Profilschenkel (2, 4) als getrennt gefertigte und miteinander starr verbundene Bauteile gestaltet sind, wobei der Mittelsteg (3) plattenförmig gestaltet und auf Höhe der wenigstens einen Abkröpfung (5) entsprechend gebogen ist, und wobei der wenigstens eine Profilschenkel (2, 4) als über die Länge des Profilträgers (1) durchgehender, einstückiger Zuschnitt gestaltet ist, der einen der wenigstens einen Abkröpfung (5) nachgeführten, durchgehenden Flanschsteg (9, 10) sowie mehrere, aneinander anschließende, im Bereich der Biegungen (7, 8) des Mittelsteges (3) voneinander getrennte Verbindungslaschen (11 bis 18) aufweist, wobei die Verbindungslaschen (11 bis 18) rechtwinklig zu dem Flanschsteg (9, 10) abgekantet und mit einer zugehörigen Längsseite des Mittelsteges (3) starr verbunden sind.

2. Profilträger (1) nach Anspruch 1,
**dadurch gekennzeichnet, daß**
der Mittelsteg (3) einstückig ausgeführt ist.

3. Profilträger (1) nach Anspruch 1,
**dadurch gekennzeichnet, daß**
der Mittelsteg (3) aus mehreren Teilstücken zusammengefügt ist.

4. Profilträger (1) nach einem der vorhergehenden Ansprüche,
**dadurch gekennzeichnet, daß**
der Mittelsteg (3) wenigstens auf einer Längsseite mit wenigstens einem Einzug (6) versehen ist, wobei der Flanschsteg (10) des zugeordneten Profilschenkels (4) im Bereich des Einzugs (6) korrespondierend gebogen ist, und wobei eine zugehörige Verbindungslasche (17) auf die Länge des Einzuges (6) abgestimmt ist.

5. Profilträger (1) nach wenigstens einem der vorhergehenden Ansprüche,
**dadurch gekennzeichnet, daß**
der Mittelsteg (3) und der wenigstens eine Profilschenkel (2, 4) aus unterschiedlichen Materialien hergestellt sind.

6. Profilträger (1) nach wenigstens einem der vorhergehenden Ansprüche,
**dadurch gekennzeichnet, daß**
der wenigstens eine Profilschenkel (2, 4) mit dem Mittelsteg (3) durch eine Vielzahl von über die Länge des Profilträgers (1) verteilt angeordneten Befestigungselementen (19), insbesondere Niet- oder Schraubverbindungen, starr verbunden ist.

7. Verfahren zur Herstellung eines Profilträgers (1), insbesondere eines Rahmenlängsträgers, für einen Tragrahmen eines Nutzfahrzeugs, wobei der Profilträger (1) mit einem Längserstreckten Mittelsteg (3), der auf wenigstens einer Seite von einem abgewinkelten Profilschenkel (24) flankiert ist, und wobei der Profilträger (1) mit wenigstens einer Abkröpfung (5) versehen wird,
**dadurch gekennzeichnet, daß**
der Mittelsteg (3) eben ist
und im Bereich der Abkröpfung (5) aus seiner Ebene heraus entsprechend dem Verlauf der Abkröpfung (5) gebogen wird, und **daß** an wenigstens eine Längsseite des Mittelsteges (3) ein über die Länge des Profilträgers (1) durchgehender Profilschenkel (2, 4) angesetzt wird, der zuvor aus einer einstückigen Platine unter Bildung eines durchgehenden und der Abkröpfung (5) nachgeführten Flanschsteges (9, 10) und mehrerer Verbindungslaschen (11 bis 18) zugeschnitten wurde, wobei die Verbindungslaschen (11 bis 18) durch auf Höhe der Biegekanten (7, 8) der wenigstens einen Abkröpfung (5) vorgesehene Einschnitte in Längsrichtung des Profilschenkels (2, 4) voneinander getrennt werden und wobei die Verbindungslaschen (11 bis 18) rechtwinklig zu dem Flanschsteg (9, 10) abgekantet und mit der korrespondierenden Längsseite des Mittelsteges (3) starr verbunden werden.

8. Verfahren nach Anspruch 7,
**dadurch gekennzeichnet**, d a ß
an dem Mittelsteg (3) auf wenigstens einer Längsseite wenigstens ein Einzug (6) vorgesehen wird, und **daß** eine Verbindungslasche (17) auf Höhe des Einzuges (6) durch die Wahl der begrenzenden Einschnitte derart dimensioniert wird, daß sie auf die Länge des Einzuges (6) abgestimmt ist.

## Claims

1. Profiled support (1), in particular chassis side member, for a support frame of a utility vehicle with a central web (3) extending lengthwise which is flanked on at least one side by an angled down profiled side (2, 4) wherein the profiled support (1) is crimped at at least one point (5)
**characterised in that**
the central web (3) and the at least one profiled side (2, 4) are formed as separately manufactured components which are rigidly connected to each other wherein the central web (3) is formed in a blank-like way and is accordingly bent at the height of the at least one point which is crimped (5) and wherein the at least one profiled side (2, 4) is formed as one section which is continuous over the length of the profiled support (1) which has a continuous flanged web (9, 10) tracked to the at least one point which is crimped (5) as well as several connecting plates (11 to 18) connecting to each other separated from each other in the region of the bends (7, 8) of the central web (3) wherein the connecting plates (11 to 18) are bent at right angles to the flanged web (9, 10) and are rigidly connected to an associated longitudinal side of the central web (3).

2. Profiled support (1) according to claim 1
**characterised in that**
the central web (3) is designed as one component.

3. Profiled support (1) according to claim 1
**characterised in that**
the central web (3) is joined together from several part components.

4. Profiled support (1) according to one of the preceding claims
**characterised in that**
the central web (3) is indented at at least one point (6) on at least one longitudinal side wherein the flanged web (10) of the associated profiled side (4) is accordingly bent in the region of the indented point (6) and wherein an associated connecting plate (17) is oriented to the length of the indented point (6).

5. Profiled support (1) according to at least one of the preceding claims
**characterised in that**
the central web (3) and the at least one profiled side (2, 4) are manufactured from different materials.

6. Profiled support (1) according to at least one of the preceding claims
**characterised in that**
the at least one profiled side (2, 4) is rigidly connected to the central web (3) by a multitude of fixing elements (19) distributed over the length of the profiled support (1), in particular riveted joints or screw joints.

7. Method for manufacturing a profiled support (1), in particular a chassis side member, for a support frame of a utility vehicle wherein the profiled support (1) with a central web (3) extending lengthwise which is flanked on at least one side by an angled down profiled side (2, 4) and wherein the profiled support (1) is crimped at at least one point (5) (sic)
**characterised in that**
the central web (3) is even and in the region of the point which is crimped (5) is bent out of its plane in accordance with the course of the crimped point (5) and **that** a profiled side (2, 4) continuous over the length of the profiled support (1) is placed on at least one longitudinal side of the central web (3) which was previously cut from a single-component blank with the formation of a continuous flanged web (9, 10) tracking the point which is crimped (5) and several connecting plates (11 to 18) wherein the connecting plates (11 to 18) are separated from each other in the lengthwise direction of the profiled side (2, 4) by points which are indented provided at the height of the bent edges (7, 8) of the at least one point which is crimped (5) and wherein the connecting plates (11 to 18) are bent at right angles to the flanged web (9, 10) and are rigidly connected to the corresponding longitudinal side of the central web (3).

8. Method according to claim 7
**characterised in that**
on the central web (3) on at least one longitudinal side at least one point which is indented (6) is provided and **that** a connecting plate (17) is sized at the height of the point which is indented (6) through selecting the adjacent sections in such a way that it is oriented to the length of the point which is indented (6).

## Revendications

1. Profilé (1), en particulier longeron de châssis, pour le châssis d'un véhicule utilitaire, comprenant un étai médian (3) s'étendant longitudinalement, qui est flanqué sur au moins un côté d'une branche coudée de profilé, moyennant quoi le profilé (1) est doté d'au moins un coude (5),
**caractérisé en ce que** l'étai médian (3) et ladite au moins l'une des branches de profilé (2, 4) sont configurés comme des parties de construction fabriquées de manière séparée et reliées fixement ensemble, moyennant quoi l'étai médian (3) est configuré en forme de plaque et est plié de manière correspondante à hauteur du au moins un coude (5), et moyennant quoi ladite au moins une des branches de profilé (2, 4) est configurée comme une découpe en une seule pièce, ininterrompue sur la longueur du profilé (1), laquelle découpe présente un étai de collerette (9, 10) ininterrompue adaptée au coude (5), ainsi que plusieurs éclisses de raccordement (11 à 18), contiguës les unes aux autres, séparées les unes des autres dans la zone des pliures (7, 8) de l'étai médian (3), moyennant quoi les éclisses de raccordement (11 à 18) sont chanfreinées à angle droit par rapport à l'étai de collerette (9, 10) et sont reliées fixement à un côté longitudinal associé de l'étai médian (3).

2. Profilé (1) selon la revendication 1,
**caractérisé en ce que** l'étai médian (3) est réalisé en une seule pièce.

3. Profilé (1) selon la revendication 1,
**caractérisé en ce que** l'étai médian (3) est assemblé à partir de plusieurs éléments.

4. Profilé (1) selon l'une quelconque des revendications précédentes,
**caractérisé en ce que** l'étai médian (3) est doté au moins sur un côté longitudinal d'au moins un renfoncement (6), moyennant quoi l'étai de collerette (10) de la branche de profilé (4) associée est plié de manière correspondante dans la zone du renfoncement (6), et moyennant quoi une éclisse de raccordement (17) associée est adaptée à la longueur du renfoncement (6).

5. Profilé (1) selon l'une quelconque des revendications précédentes,
**caractérisé en ce que** l'étai médian (3) et l'une des branches de profilé (2, 4) sont fabriqués à partir de différents matériaux.

6. Profilé (1) selon l'une quelconque des revendications précédentes,
**caractérisé en ce que** l'une des branches de profilé (2, 4) est reliée fixement à l'étai médian (3) par une pluralité d'éléments de fixation (19), en particulier des assemblages par vis ou rivetés, disposés de manière répartie sur la longueur du profilé (1).

7. Procédé de fabrication d'un profilé (1), en particulier d'un longeron de châssis, pour le châssis d'un véhicule utilitaire, moyennant quoi le profilé (1) est doté d'un étai médian (3) étendu en longueur, qui est flanqué sur au moins un côté d'une branche coudée de profilé (2, 4), et moyennant quoi le profilé (1) est doté d'au moins un coude (5),
**caractérisé en ce que** l'étai médian (3) est plat et est plié dans la zone du coude (5) hors de son plan de manière correspondante au tracé du coude (5), et **en ce que** sur au moins un côté longitudinal de l'étai médian (3) est placée une branche de profilé (2, 4) ininterrompue sur la longueur du profilé (1), laquelle branche a été précédemment découpée à partir d'une platine en une seule pièce, en formant un étai de collerette (9, 10) ininterrompue et adaptée au coude (5), et de plusieurs éclisses de raccordement (11 à 18), moyennant quoi les éclisses de raccordement (11 à 18) sont séparées les unes des autres par des entailles prévues à hauteur des arêtes de pliure (7, 8) du au moins un coude (5) dans la direction longitudinale de la branche de profilé (2, 4), et moyennant quoi les éclisses de raccordement (11 à 18) sont chanfreinées à angle droit par rapport à l'étai de collerette (9, 10) et sont reliées fixement au côté longitudinal correspondant de l'étai médian (3).

8. Procédé selon la revendication 7,
**caractérisé en ce qu'**au moins un renfoncement (6) est prévu sur l'étai médian (3) sur au moins un côté longitudinal, et **en ce qu'**une éclisse de raccordement (17) est dimensionnée à hauteur du renfoncement (6), par la sélection des entailles limitatives, de telle sorte qu'elle soit adaptée à la longueur du renfoncement (6).
